# FASCICULE DE BREVET EUROPEEN

(11) **EP 0 919 439 B1**
(45) Date de publication et mention de la délivrance du brevet: **07.09.2005**
(21) Numéro de dépôt: 98402954.6
(22) Date de dépôt: 26.11.1998
(51) Int. Cl.: B60R 16/02

(54) **Circuit électrique de véhicule automobiles adapté pour l'alimentation d'un microcontrôleur**
Elektrischer Schaltkreis zum Speisen eines Mikrokontrollers in einem Kraftfahrzeug
Electric circuit for supplying a microcontroller in a motor vehicle

(30) Priorité: 28.11.1997 FR 9714999
(43) Date de publication de la demande: 02.06.1999
(73) Titulaire: Magneti Marelli Systèmes Electroniques S.A.S, 92000 Nanterre (FR)
(72) Inventeur: Louvart, Shehnaz, 92400 Courbevoie (FR); Le Gallic, Lan, 93500 Pantin (FR)
(74) Mandataire: Texier, Christian

(56) Documents cités:
- EP-A- 0 396 355
- EP-A- 0 453 236
- EP-A- 0 744 322
- JP-A- 8 104 200
- US-A- 4 553 196
- US-A- 5 305 215

## Description

La présente invention concerne les circuits électriques de véhicules automobiles, et, plus spécifiquement, de tels circuits comportant un microcontrôleur.

Un tel circuit qui correspond aux caractéristiques du préambule de la revendication 1 est connu du US 4553196A.

De plus en plus d'organes électroniques sont introduits dans les véhicules automobiles modernes. Par exemple, les tableaux de bord étaient par le passé constitués essentiellement d'organes électromagnétiques, de logos, d'aiguilles et de témoins lumineux. Aujourd'hui les tableaux de bord comportent des calculateurs de bord qui permettent une gestion de l'information et un affichage numérique. Les tableaux de bord modernes fournissent ainsi des informations sur la consommation, l'autonomie, ou plus généralement sur l'état de fonctionnement de divers organes sensibles du véhicule. Les tableaux de bord reçoivent donc des circuits électroniques de plus en plus complexes, et notamment des circuits comportant un ou plusieurs microcontrôleurs ou microprocesseurs.

De manière habituelle, un contrôleur a pour fonction de déterminer si un alternateur doit ou non charger une ou des batteries, et de débrancher la batterie sur laquelle compte le conducteur du véhicule pour démarrer lorsqu'il s'avère nécessaire de préserver la charge de cette batterie.

Un contrôleur ou microcontrôleur de tableau de bord peut également avoir pour rôle de réaliser un diagnostic de l'état de fonctionnement de différents organes du véhicule, d'un niveau de charge de batteries ou d'un niveau de remplissage d'huile ou de carburant.

Les batteries et circuits classiques d'alimentation des contrôleurs ou microcontrôleurs ne sont pas toujours satisfaisants et nécessitent une alimentation stabilisée en tension.

Un but de la présente invention est de proposer un circuit électrique comportant un contrôleur, dans lequel le contrôleur reste opérationnel pour un plus grand nombre de cas de défaillances de la ou des batteries qui alimentent ce contrôleur.

Un tel circuit est défini par les caractéristiques de la revendication 1. Le circuit électrique de véhicule automobile comporte entre autres une batterie et un microcontrôleur et un dispositif élévateur de tension disposé entre une sortie de la batterie et une entrée du microcontrôleur.

Grâce à cet élévateur de tension, le contrôleur est alimenté avec une tension suffisante à son fonctionnement pour une gamme de tensions en sortie de la ou des batteries qui comprend des valeurs inférieures à une limite basse des tensions d'entrée du contrôleur pour lesquelles il fonctionne.

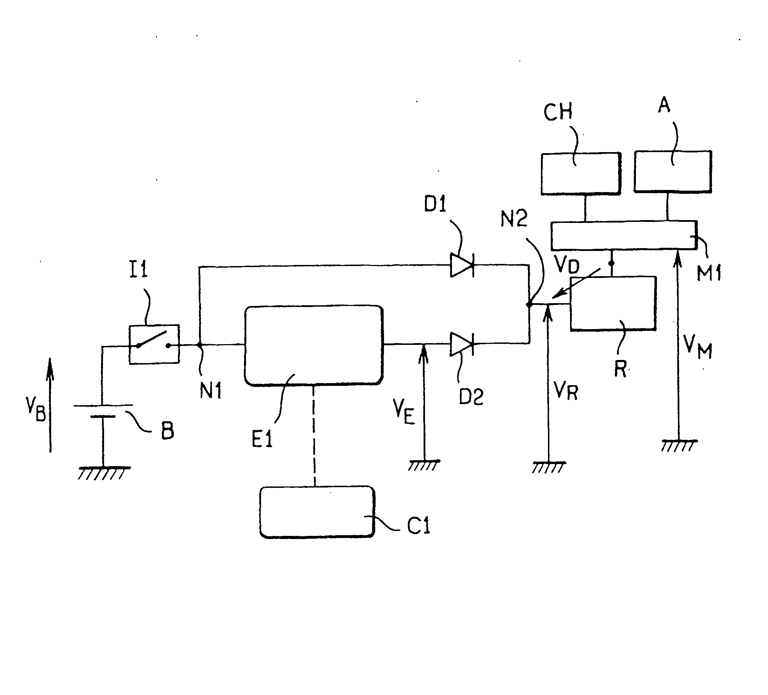

D'autres caractéristiques, buts et avantages de la présente invention apparaîtront à la lecture de la description détaillée qui va suivre, et en regard de l'unique dessin annexé, donné à titre d'exemple non limitatif et sur lequel est représenté un schéma de montage sous forme de blocs fonctionnels d'un circuit d'alimentation de charges d'un véhicule automobile conforme à la présente invention.

On a représenté sur l'unique figure annexée un circuit conforme à l'invention reliant une batterie B à un ensemble de charges CH d'un véhicule et, en parallèle avec les charges CH, à un dispositif d'affichage A de tableau de bord.

En parcourant ce circuit à partir de la batterie B jusqu'aux charges CH et au dispositif d'affichage A, on trouve successivement un interrupteur I1, deux branches de circuit en parallèle entre un noeud amont N1 et un noeud aval N2, puis un régulateur de tension R, un microcontrôleur de carte électronique M1, et enfin l'ensemble des charges CH montées en parallèle avec le dispositif d'affichage A.

Une première des deux branches en parallèle entre le noeud amont N1 et le noeud aval N2 comporte une diode D1 montée passante du noeud amont N1 vers le noeud aval N2. L'autre de ces deux branches comporte successivement, du noeud amont N1 vers le noeud aval N2, un élévateur E1 de tension puis une diode D2 montée passante de l'élévateur de tension E1 vers le noeud N2.

L'élévateur de tension E1 est commandé par un détecteur C1 de niveau de tension de la batterie B. Le détecteur C1 présente deux positions, l'une stable et l'autre instable, la position instable étant adoptée lorsque le niveau de tension de la batterie B est en dessous d'un seuil donné. Dans la position stable du détecteur C1, l'élévateur de tension E1 ne fonctionne pas et constitue un coupe circuit. En position instable du détecteur C1, l'élévateur de tension E1 est opérationnel.

Dans cet exemple de réalisation, la batterie B est une batterie délivrant entre ses bornes une tension VB de 12 volts lorsqu'elle est dans un état de charge normal. L'interrupteur I1 est actionné par rotation d'une clef de contact dans un commutateur de démarrage du véhicule, situé à proximité de la position d'un conducteur dans le véhicule.

Le microcontrôleur M1 est dans ce mode de réalisation préférentiel un microcontrôleur de carte électronique de tableau de bord qui est apte, outre des fonctions habituelles de gestion de la charge et de la décharge de la batterie B, à effectuer un test sur l'état de fonctionnement de différents éléments du véhicule, tels qu'un niveau d'huile, la charge d'une batterie, le fonctionnement ou non de projecteurs, ou un niveau de remplissage d'un réservoir à carburant. En fonction du résultat de ces différents tests, le microcontrôleur M1 commande l'allumage de différentes diodes ou de LEDs de tableau de bord, notamment pour avertir le conducteur dans le cas d'une défaillance d'un élément du véhicule. L'ensemble de ces diodes ou LEDs est symbolisé par un unique bloc fonctionnel référencé A sur la figure unique, et que l'on designe de manière générale dispositif d'affichage dans la suite.

Le microcontrôleur M1 n'est apte à fonctionner que lorsqu'il est alimenté avec une tension VM égale à 5 volts.

Le régulateur R a pour fonction de fournir au microcontrôleur M1 une tension VM sensiblement égale à 5 volts lorsqu'une tension VR en entrée du régulateur est comprise typiquement entre 5 et 12 volts, selon l'état de charge de la batterie B. Plus précisément, la tension VR est égale à la somme de la valeur 5 volts et d'une tension de décalage VD, VD étant égale à VR-VM.

Dans une variante de l'invention, les charges en aval du régulateur R peuvent varier. Le régulateur R a alors pour fonction supplémentaire de s'adapter à ces variations de charge de manière à fournir une tension VM sensiblement constante quelles que soient les charges à alimenter en aval du régulateur R.

Le régulateur R est apte à fournir une tension VM constante malgré des fluctuations de la tension VR, mais uniquement lorsque ces fluctuations sont comprises dans une gamme de tensions ne comportant pas de valeurs inférieures à 5 V + VD. VD varie selon le type de régulateur.

Les charges CH incluent par exemple des charges nécessaires au démarrage du véhicule telles qu'un démarreur électrique ou un dispositif de préchauffage.

Lorsque la tension VB entre les bornes de la batterie est comprise entre 5 V + VD et 12 volts, le fonctionnement du montage de la figure unique est le suivant.

Pour démarrer le véhicule, un conducteur ferme l'interrupteur I1 par l'intermédiaire d'un commutateur de démarrage disposé par exemple devant ce conducteur dans le véhicule. La tension VB entre les bornes de la batterie B est transmise par l'intermédiaire de la diode D1 au régulateur R. Le régulateur R transmet à son tour une tension VM sensiblement égale à 5 volts au microcontrôleur M1, qui est alors rendu opérationnel.

Le microcontrôleur transmet alors une énergie électrique aux charges CH, effectue un ensemble de tests de fonctionnement sur différents organes du véhicule et commande l'affichage sur le tableau de bord des résultat de ces tests grâce au dispositif d'affichage A.

Dans ce cas, où la batterie B présente une tension entre ses bornes qui est supérieure à 5 V + VD, le détecteur C1 de niveau de tension aux bornes de la batterie B ne détecte pas de tension inférieure à 5 V + VD et donc reste dans sa position stable. L'élévateur de tension E1reste donc équivalent à un coupe-circuit pendant toute la phase de démarrage.

Lorsque la batterie B est défaillante, c'est-à-dire lorsqu'elle présente une tension entre ses bornes qui est inférieure à 5 V + VD, le fonctionnement du dispositif représenté sur la figure unique est le suivant.

Le conducteur ferme l'interrupteur I1 pour démarrer le véhicule. Le détecteur C1 de niveau de tension en sortie de la batterie B détecte une tension inférieure à 5 V + VD et commande la mise en fonctionnement de l'élévateur de tension E1.

La tension reçue en entrée de l'élévateur de tension E1 est égale à la tension VB entre les bornes de la batterie B. Si cette tension n'est pas trop faible, l'élévateur de tension E1 produit à sa sortie une tension VD supérieure à 5 V + VD qui est transmise par l'intermédiaire de la diode D2 au régulateur R.

La tension au noeud N2 étant alors supérieure à 5 V + VD tandis que la tension au noeud N1 est inférieure à 5 V + VD, la diode D1 est donc bloquante.

Le régulateur R est donc en mesure de transmettre une tension égale à 5 volts au microcontrôleur M1, qui entre alors en fonctionnement, effectue un diagnostique de l'état de fonctionnement de différents organes du véhicule, commande l'affichage par le dispositif A des résultats de ce diagnostique sur le tableau de bord et transmet une énergie électrique aux charges CH si la puissance de la batterie le permet.

Lorsque la batterie B n'est pas en mesure de fournir entre ses bornes une tension VB supérieure à 5 V + VD, mais qu'elle conserve une énergie électrique emmagasinée suffisante pour alimenter l'ensemble microcontrôleur M1 / charges CH / dispositif d'affichage A pendant une durée non négligeable, la mise en marche de l'élévateur E1 permet donc d'alimenter le microcontrôleur M1 avec une tension supérieure à une tension seuil nécessaire à son fonctionnement.

Les charges CH peuvent inclure un démarreur électrique qui a besoin, pour démarrer le véhicule, d'une quantité d'énergie électrique que la batterie B est apte à fournir, y compris pour des états de charge où la tension entre ses bornes est nettement inférieure à 5 V + VD.

Dans le mode de réalisation de l'invention représenté sur la figure unique, la somme des énergies nécessaires d'une part au microcontrôleur pour effectuer un diagnostique sur différents organes du véhicule, et d'autre part au dispositif d'affichage A pour afficher des informations sur le tableau de bord, est inférieure à l'énergie dont ont besoin les charges CH pour fonctionner correctement. Dans certains cas, la batterie B présente un état de décharge particulièrement avancé, de sorte qu'elle n'est pas en mesure de fournir suffisamment d'énergie aux charges CH pour que celles-ci puissent fonctionner correctement, par exemple pour démarrer le véhicule dans le cas où les charges CH comprennent un démarreur ou un dispositif de préchauffage. Dans ce type de cas elle peut en revanche être en mesure de fournir suffisamment d'énergie pour que le microcontrôleur M1 effectue un test de fonctionnement sur différents organes du véhicule, et pour que ce diagnostic soit affiché au tableau de bord par le dispositif d'affichage A.

On prévoit alors dans le cadre de l'invention que le circuit soit muni de moyens de diagnostic aptes à identifier de tels états de défaillance de la batterie B de façon à ce que le microcontrôleur M1 alimente alors le dispositif d'affichage A en priorité par rapport aux charges de démarrage CH.

Ainsi, l'énergie restante stockée dans la batterie B est alors réservée à l'affichage des tests de fonctionnement par le dispositif A, cet affichage étant d'une importance considérable par exemple lorsque la décharge de la batterie a été causée par le dysfonctionnement d'un des organes testés par le microcontrôleur M1. Dans ce cas en effet, le conducteur peut prendre connaissance du dysfonctionnement qui est à l'origine de la décharge de la batterie et remédier à ce dysfonctionnement avant de recharger la batterie, ou éventuellement débrancher un organe consommant de manière anormale une énergie électrique, pour délester la batterie B et permettre le démarrage du véhicule.

Dans une variante de l'invention non représentée, le microcontrôleur M1 n'est relié à aucune charge de démarrage et n'a qu'une fonction de diagnostique et/ou d'affichage sur le tableau de bord. Selon une autre variante, le microcontrôleur M1 n'a pour seules fonctions que de relier de manière sélective des charges telles que des charges de démarrage au régulateur R ou à tout autre circuit d'alimentation électrique.

Dans un mode de réalisation préférentiel de l'invention, l'élévateur de tension E1 est un générateur de tension à découpage, dont on trouvera un exemple de réalisation dans la demande de brevet français FR 2 757 706 A1 déposée par la demanderesse, et plus spécifiquement un générateur de tension du type à découpage à résonance.

Un générateur de ce type pourra comprendre un circuit résonant dont un élément peut être court-circuité pour interrompre les oscillations ou libéré pour autoriser ces oscillations, par un interrupteur électronique de type compatible métal-oxyde semi-conducteur CMOS par exemple, commandé par un monostable lui-même piloté par un oscillateur commandé par la tension de sortie de l'élévateur de façon à obtenir un contrôle du rapport durée de fermeture / durée d'ouverture de l'interrupteur CMOS et donc un contrôle du rapport durée des oscillations / durée de blocage des oscillations et ainsi permettre une régulation de la tension de sortie de l'élévateur de tension.

Un tel générateur sera préférentiellement muni d'un asservissement apte à diminuer les perturbations électromagnétiques émises.

## Revendications

1. Circuit électrique de véhicule automobile comportant une batterie (B), un microcontrôleur (M1) et un élévateur de tension (E1) disposé entre une sortie de la batterie (B) et une entrée du microcontrôleur (M1), comportant en outre un dispositif de commande (C1) apte à mettre en fonctionnement l'élévateur de tension (E1) en fonction de la tension (VB) disponible aux bornes de la batterie (B), **caractérisé en ce que** le dispositif de commande (C1) est un dispositif de diagnostic de défaillance de batterie par mesure de la tension (VB) aux bornes de la batterie (B), qui met l'élévateur de tension en fonctionnement en cas d'une telle défaillance de la batterie.

2. Circuit selon la revendication 1, **caractérisé en ce que** les moyens de diagnostic de défaillance de la batterie (B) sont prévus pour commander une alimentation d'un dispositif d'affichage en priorité par rapport à des charges de démarrage (CH).

3. Circuit selon la revendication 1 ou la revendication 2, **caractérisé en ce que** le microcontrôleur (M1) comporte des moyens destinés à tester si certains éléments du véhicule ne présentent pas de défaillances.

4. Circuit selon l'une quelconque des revendications précédentes, **caractérisé en ce que** le dispositif d'affichage (A) de tableaux de bord est apte à ètre commandé par le microcontrôleur.

5. Circuit selon la revendication 3 en combinaison avec la revendication 4, **caractérisé en ce qu'**il comporte des moyens de diagnostic aptes à identifier des états de défaillance de la batterie de sorte que le microcontrôleur (M1) réserve dans ces états de défaillance l'énergie restante de la batterie (B) à l'affichage des tests de fonctionnement.

6. Circuit selon l'une des revendications précédentes, **caractérisé en ce que** l'élévateur de tension (E1) est un générateur de tension à découpage.

7. Circuit selon l'une des revendications précédentes, **caractérisé en ce que** l'élévateur de tension (E1) est placé en parallèle avec une branche comportant une diode de transmission directe (D1) montée passante de la batterie (B) vers le microcontrôleur (M1)

8. Circuit selon la revendication 7, **caractérisé en ce que** l'élévateur de tension (E1) est monté en série avec une diode (D2) montée passante de la batterie (B) vers le microcontrôleur (M1) et en amont de celle-ci par rapport à un sens allant de la batterie (B) vers le microcontrôleur (M1), l'élévateur de tension (E1) et cette diode (D2) étant sur une branche parallèle à la branche comportant la diode de transmission directe (D1).

9. Circuit selon l'une des revendications précédentes, **caractérisé en ce qu'**un régulateur de tension (R) est disposé entre l'élévateur de tension (E1) et le microcontrôleur (M1).

## Patentansprüche

1. Elektrische Schaltung für ein Kraftfahrzeug mit einer Batterie (B), einer Mikrosteuerung (M1) und einem Spannungserhöher (E1), der zwischen einem Ausgang der Batterie (B) und einem Eingang der Mikrosteuerung (M1) angeordnet ist, und mit einer Steuervorrichtung (C1), die geeignet ist, den Spannungserhöher (E1) abhängig von der an den Anschlüssen der Batterie (B) verfügbaren Spannung (VB) einzuschalten, **dadurch gekennzeichnet, dass** die Steuervorrichtung (C1) eine Vorrichtung zur Diagnose eines Batterieausfalles durch Messung der Spannung (VB) an den Anschlüssen der Batterie (B) ist, die den Spannungserhöher im Falle eines solchen Ausfalles der Batterie einschaltet.

2. Schaltung nach Anspruch 1, **dadurch gekennzeichnet, dass** die Mittel zur Diagnose eines Ausfalles der Batterie (B) vorgesehen sind, eine Versorgung einer Anzeigevorrichtung (A) vorrangig vor Anlauflasten (CH) zu steuern.

3. Schaltung nach Anspruch 1 oder Anspruch 2, **dadurch gekennzeichnet, dass** die Mikrosteuerung (M1) Mittel umfaßt, die zum-Prüfen ausgestaltet sind, ob bestimmte Elemente des Fahrzeuges keinen Ausfall aufweisen.

4. Schaltung nach einem der vorhergehenden Ansprüche, **dadurch gekennzeichnet, dass** die Anzeigevorrichtung (A) des Armaturenbrettes geeignet ist, von der Mikrosteuerung gesteuert zu werden.

5. Schaltung nach Anspruch 3 in Kombination mit Anspruch 4, **dadurch gekennzeichnet, dass** sie Diagnosemittel umfasst, die geeignet sind, Ausfallzustände der Batterie derart zu identifizieren, dass die Mikrosteuerung (M1) in diesen Ausfallzuständen die von der Batterie (B) übrig bleibende Energie zur Anzeige der Funktionstests reserviert.

6. Schaltung nach einem der vorhergehenden Ansprüche, **dadurch gekennzeichnet, dass** der Spannungserhöher (E1) ein getakteter Spannungserzeuger ist.

7. Schaltung nach einem der vorhergehenden Ansprüche, **dadurch gekennzeichnet, dass** der Spannungserhöher (E1) parallel zu einem Zweig angeordnet ist, der eine Direktdurchlaßdiode (D1) umfasst, die von der Batterie (B) zur Mikrosteuerung (M1) in Durchlaß geschaltet ist.

8. Schaltung nach Anspruch 7, **dadurch gekennzeichnet, dass** der Spannungserhöher (E1) in Serie mit einer Diode (D2) geschaltet ist, die von der Batterie (B) zur Mikrosteuerung (M1) in Durchlaß und bezüglich einer Richtung von der Batterie (B) zur Mikrosteuerung (M1) stromauf von dieser geschaltet ist, wobei der Spannungserhöher (E1) und diese Diode (D2) auf einem Zweig parallel zum Zweig liegen, der die Direktdurchlassdiode (D1) umfasst.

9. Schaltung nach einem der vorhergehenden Ansprüche, **dadurch gekennzeichnet, dass** ein Spannungsregler (R) zwischen dem Spannungserhöher (E1) und der Mikrosteuerung (M1) angeordnet ist.

## Claims

1. Electric circuit for motor vehicle comprising a battery (B), a microcontroller (M1) and a voltage step-up device (E1) positioned between an output of the battery (B) and an input of the microcontroller (M1), also comprising a control device (C1) for starting the voltage step-up device (E1) according to the voltage (VB) available at the terminals of the battery (B), **characterized in that** the control device (C1) is a device for diagnosing battery failure by measuring the voltage (VB) at the terminals of the battery (B), which starts the voltage step-up device in the event of such a battery failure.

2. Circuit according to Claim 1, **characterized in that** the means of diagnosing failure of the battery (B) are designed to control a power supply for a display device (A) with priority over start-up loads (CH).

3. Circuit according to Claim 1 or Claim 2,
**characterized in that** the microcontroller (M1) includes means for testing certain elements of the vehicle for faults.

4. Circuit according to any one of the preceding claims, **characterized in that** the dashboard display device (A) is designed to be controlled by the microcontroller.

5. Circuit according to Claim 3 in conjunction with Claim 4, **characterized in that** it comprises diagnostic means designed to identify battery failure states such that the microcontroller (M1) reserves in these failure states the remaining power of the battery (B) to display operating tests.

6. Circuit according to one of the preceding claims, **characterized in that** the voltage step-up device (E1) is a switched-mode voltage generator.

7. Circuit according to one of the preceding claims, **characterized in that** the voltage step-up device (E1) is placed in parallel with a branch comprising a forward transmission diode (D1) mounted conducting from the battery (B) to the microcontroller (M1).

8. Circuit according to Claim 7, **characterized in that** the voltage step-up device (E1) is mounted in series with a diode (D2) mounted conducting from the battery (B) to the microcontroller (M1) and upstream of the latter relative to a direction going from the battery (B) to the microcontroller (M1), the voltage step-up device (E1) and this diode (D2) being on a branch parallel to the branch comprising the forward transmission diode (D1).

9. Circuit according to one of the preceding claims, **characterized in that** a voltage regulator (R) is positioned between the voltage step-up device (E1) and the microcontroller (M1).
